**Europäisches Patentamt**

**European Patent Office**

**Office européen des brevets**

(19)

(11) Veröffentlichungsnummer: **0 067 376**
**B1**

(12) # EUROPÄISCHE PATENTSCHRIFT

(45) Veröffentlichungstag der Patentschrift:
**12.09.84**

(51) Int. Cl.³: **F 24 D 19/10,** G 05 D 23/19

(21) Anmeldenummer: **82104889.9**

(22) Anmeldetag: **03.06.82**

(54) **Hochdrucküberwachungsverfahren zum Betrieb einer Wärmepumpe im Rahmen einer mindestens bivalenten Heizungsanlage.**

(30) Priorität: **15.06.81 DE 3123686**

(43) Veröffentlichungstag der Anmeldung:
**22.12.82 Patentblatt 82/51**

(45) Bekanntmachung des Hinweises auf die Patenterteilung:
**12.09.84 Patentblatt 84/37**

(84) Benannte Vertragsstaaten:
**AT CH DE FR GB LI**

(56) Entgegenhaltungen:
**DE - A - 2 710 871**
**DE - A - 2 748 248**

(73) Patentinhaber: **SIEMENS AKTIENGESELLSCHAFT, Berlin und München Wittelsbacherplatz 2, D-8000 München 2 (DE)**

(72) Erfinder: **Schön, Manfred, Goethering 25B, D-8504 Stein (DE)**

EP 0 067 376 B1

# Beschreibung

Die Erfindung betrifft ein Hochdrucküberwachungsverfahren zum Betrieb einer Wärmepumpe in Rahmen einer mindestens bivalenten Heizungsanlage nach dem Oberbegriff des Patentanspruches 1.

Die obere Einsatzgrenze einer Wärmepumpe ist u.a. bei einer Temperatur des Wärmeträgers von ca. 55° C gegeben. Ein Betrieb einer Wärmepumpe bei einer höheren Temperatur des Wärmeträgers führt zu einer Gefährdung der Wärmepumpe. Ein Erreichen oder Überschreiten dieses Temperaturgrenzwertes wird üblicherweise durch einen im Kompressorkreis der Wärmepumpe befindlichen Hochdruck-Pressostaten als Sensor signalisiert, dessen das Erreichen dieses Temperaturgrenzwertes anzeigendes Signal im folgenden HD-Signal genannt wird. Das HD-Signal dient als Abschaltsignal für die Wärmepumpe.

Bei im Heizungsanlagenbau realisierten Heizungsanlagen wird bei Auftreten eines HD-Signals die Wärmepumpe abgeschaltet und nach einer konstanten Wartezeit von etwa 10 min wieder freigegeben. Tritt in einer nach erneuter Freigabe und Wiedereinschaltung der Wärmepumpe sich anschliessenden Überwachungszeitspanne von etwa 5 min ein erneutes HD-Signal auf, so hat dies eine Störungsanzeige und Abschaltung der Wärmepumpe zur Folge. Eine erneute Inbetriebnahme der Wärmepumpe kann dann erst nach Beseitigen des HD-Signals und Quittieren der Störungsmeldung erfolgen.

Bei sinkender Aussentemperatur und über das gesteuerte Mischventil eingekoppelter zusätzlicher Wärmequelle, die meist als mit fossilen Brennstoffen befeuerter Heizungskessel ausgeführt ist, kann die Temperatur des Wärmeträgers aufgrund des erhöhten Wärmebedarfs des zu beheizenden Gebäudes den Temperaturgrenzwert von etwa 55° C überschreiten. Nach Auftreten eines HD-Signals und anschliessendem Ablauf der Wartezeit von etwa 10 min haben sich die Temperaturverhältnisse jedoch noch nicht geändert, so dass ein Wiedereinschalten der Wärmepumpe zwangsläufig eine Störungsmeldung zur Folge hat, obwohl es sich um einen normalen Betriebszustand handelt. Der gleiche Fall kann auch bei Warmwasserbereitung mit zugeschalteter zusätzlicher Wärmequelle auftreten, da bei der Warmwasserbereitung das Mischventil voll geöffnet ist.

Der Erfindung liegt die Aufgabe zugrunde, ein Hochdrucküberwachungsverfahren nach dem Oberbegriff des Patentanspruches 1 anzugeben, bei dem die Abgabe einer Störungsmeldung und Stillegung der Wärmepumpe bei normalen Betriebszuständen ausgeschlossen ist.

Die Aufgabe wird erfindungsgemäss durch die kennzeichnenden Merkmale des Patentanspruches 1 gelöst.

Vorteilhafte Weiterbildungen der Erfindung sind Gegenstand der Unteransprüche.

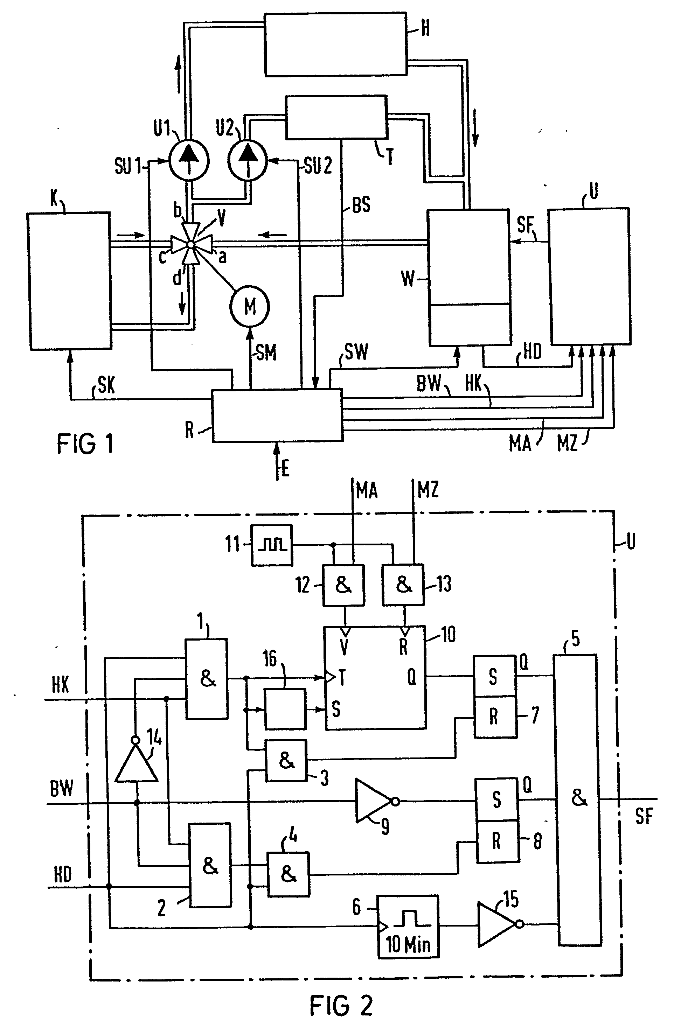

Die Erfindung wird im folgenden anhand eines in den Fig. 1 und 2 dargestellten Ausführungsbeispiels näher erläutert. Dabei zeigt:

Fig. 1 eine Prinzipdarstellung der Heizungsanlage, und

Fig. 2 eine Schaltungsanordnung in Form eines Blockschaltbildes zur Veranschaulichung und Durchführung des erfindungsgemässen Hochdrucküberwachungsverfahrens.

In Fig. 1 ist die Wärmepumpe mit dem Bezugszeichen W belegt, die im Fall des Ausführungsbeispiels als Luft-Wasser-Wärmepumpe ausgeführt ist. Von den der Raumheizung dienenden Heizkörpern ist nur einer dargestellt und mit dem Bezugszeichen H bezeichnet. In der im Heizungsrücklauf angeordneten Wärmepumpe W wird das als Wärmeträger dienende Wasser erwärmt und über das als Vierwegeventil ausgebildete Mischventil V und die Umwälzpumpe U1 in den Heizkörper H zurückgeführt. Parallel zu dem aus der Umwälzpumpe U1 und dem Heizkörper H gebildeten Strömungszweig ist ein zweiter Strömungszweig, bestehend aus der Umwälzpumpe U2 sowie dem nachgeschalteten Wärmetauscher T, für die Warmwasserbereitung angeordnet.

Als zuschaltbare Wärmequelle dient ein Heizungskessel K, der vorzugsweise durch einen fossilen Energieträger beheizt wird. Der Heizungskessel K beinhaltet in üblicher Weise eine interne Regelung, die dafür sorgt, dass eine vorgebbare Temperatur des im Heizungskessel befindlichen Wärmeträgers aufrechterhalten wird. Der im Heizungskessel K aufgeheizte Wärmeträger kann — wenn der Heizungskessel K über das Mischventil V in den aus den Umwälzpumpen U1 bzw. U2, dem Heizkörper H und dem Wärmetauscher T sowie der Wärmepumpe W bestehenden Heizkreislauf eingekoppelt ist — über den Anschluss c des Mischventils V dem Heizkreislauf zuströmen, wohingegen aus dem Anschluss d des Mischventils V je nach Stellung des Mischventils ein mehr oder weniger grosser Anteil des von der Wärmepumpe W in den Anschluss a einströmenden Wärmeträgers abgezweigt wird. Der Anschluss b des Mischventils V liefert den Heizungsvorlauf. Wenn der Heizungskessel K aus dem Heizkreislauf ausgekoppelt ist, befindet sich das Mischventil V in einer Endlage, in der je für sich die Anschlüsse a und b sowie d und c miteinander verbunden sind. In der anderen Endlage des Mischventils V, die beispielsweise zur Warmwasserbereitung eingenommen wird, sind jeweils für sich die Anschlüsse a und d sowie c und b voll verbunden, so dass der gesamte, aus der Wärmepumpe W ausströmende Wärmeträger auch den Heizungskessel K passiert. Ist der Heizungskessel K in den Heizkreislauf eingekoppelt und sowohl die Wärmepumpe W als auch der Heizungskessel in Betrieb, so spricht man vom Parallelbetrieb, bei dem beide Wärmequellen, nämlich die Wärmepumpe W und der Heizungskessel K, gemeinsam dies erforderliche Wärmeleistung aufbringen, was immer dann der Fall ist, wenn die Wärmepumpe W dies nicht mehr allein zu leisten vermag.

Zum Betrieb der Heizungsanlage ist eine Regeleinrichtung R vorgesehen, die aus summarisch mit E bezeichneten Eingangsgrössen Stellsignale für die Stellglieder der Heizungsanlage ermittelt. Solche Eingangsgrössen E sind beispielsweise die Aussentemperatur, Ist- und Solltemperatur eines temperaturbestimmenden Raumes sowie Ist- und Solltemperatur des im Warmwasservorratsbehälters befindlichen Warmwassers. Darüber hinaus wird vom Wärmetauscher T an die Regeleinrichtung R ein Bedarfssignal BS abgegeben, solange die Temperatur im nicht dargestellten Speicherkessel für Warmwasser unterhalb eines vorgegebenen Sollwertes liegt. Erreicht die Isttemperatur im Speicherkessel den Sollwert, so wird der Öffnungsgrad des Mischventils V auf etwa 50% reduziert. Damit ist der Betriebszustand Warmwasserbereitung abgeschlossen. Als vom Regler R abgegebene Stellsignale sind nur beispielhaft das Stellsignal SK für den Heizungskessel, das Stellsignal SM für das über den Stellmotor M fernbetätigbare Mischventil V, die Einschaltsignale SU1 und SU2 für die Umwälzpumpen U1 und U2 sowie das Stellsignal SW für die Wärmepumpe W in Fig. 1 eingezeichnet.

Um den Betrieb der Wärmepumpe W bei oberhalb des die Wärmepumpe W gefährdenden Temperaturgrenzwertes des Wärmeträgers auszuschliessen und um die Wärmepumpe bei unterhalb dieses kritischen Temperaturgrenzwertes liegenden Temperaturen des Wärmeträgers freizugeben, ist eine Hochdrucküberwachungseinrichtung U vorgesehen, deren Ausgangssignal SF entweder die Sperre der Wärmepumpe W oder ihre Freigabe veranlasst.

Die Hochdrucküberwachungseinrichtung verarbeitet als Eingangssignal die Signale HD, BW, HK, MA und MZ. Das Eingangssignal HD stellt das Ausgangssignal des im Kompressorkreis der Wärmepumpe W befindlichen Hochdruck-Pressostaten dar, der ein Druckgrenzwertmelder ist, wobei der Druck im Kompressorkreis der Wärmepumpe in einem naturgesetzlichen Zusammenhang mit der Temperatur des im Kompressorkreis befindlichen Übertragungsmediums steht. Das Eingangssignal BW ist aktiv, wenn durch die Regeleinrichtung R der Betriebsfall Warmwasserbereitung vorliegt, wobei die Umwälzpumpe U2 in Betrieb gesetzt ist. Das Eingangssignal HK ist aktiv, solange der Heizungskessel in Betrieb ist und damit für die Einkopplung in den Heizkreislauf bereit ist oder eingekoppelt ist, wobei eine der beiden Umwälzpumpen U1 oder U2 eingeschaltet sein kann. Das Eingangssignal MA ist aktiv, solange der Stellmotor M des Mischventils W dessen Ventilöffnungsgrad vergrössert, wohingegen das Eingangssignal MZ aktiv ist, solange der Stellmotor M unter der Einwirkung der Regeleinrichtung R über das Signal SM den Ventilöffnungsgrad des Mischventils W verkleinert.

Wirkung und Aufbau der Regeleinrichtung R in Verbindung mit bi- bzw. multivalenten Heizungsanlagen im Hinblick auf die Wärmeerzeugung durch die Wärmepumpe W bzw. den Parallelbetrieb von Wärmepumpe W und Heizungskessel K sind in den älteren Patentanmeldungen DE-A Nrn. 3101637 und 3112220 näher beschrieben.

Ein Ausführungsbeispiel für den Aufbau der Hochdrucküberwachungseinrichtung U ist in Fig. 2 anhand eines Blockschaltbildes dargestellt. Die im vorstehenden erörterten Eingangssignale HD, BW und HK sind den Eingängen zweier UND-Gatter 1 und 2 zugeführt, von denen jedes drei Eingänge aufweist wobei das Eingangssignal BW, dem entsprechenden Eingang des UND-Gatters 1 über ein Invertierglied 14 zugeführt ist. Das Ausgangssignal des UND-Gatters 1 ist zusammen mit dem Eingangssignal HD über ein drittes UND-Gatter 3 verknüpft. Das Ausgangssignal des zweiten UND-Gatters 2 ist ebenfalls mit dem Eingangssignal HD über ein viertes UND-Gatter 4 logisch verknüpft. Der Ausgang des dritten UND-Gatters 3 ist an den Rücksetzeingang eines Flip-Flops 7, der Ausgang des vierten UND-Gatters 4 an den Rücksetzeingang eines weiteren Flip-Flops 8 angeschlossen. Darüber hinaus ist dem Setzeingang des weiteren Flip-Flops 8 das Eingangssignal BW über ein Invertierglied 9 zugeführt. Der Ausgang Q dieses weiteren Flip-Flops 8 ist dem einen Eingang eines fünften UND-Gatters 5 mit drei Eingängen zugeführt. In ähnlicher Weise ist der Ausgang Q des Flip-Flops 7 an den zweiten Eingang des UND-Gatters 5 angeschlossen. Der dritte Eingang des fünften UND-Gatters 5 ist mit dem Ausgangssignal aus der Reihenschaltung einer monostabilen Kippstufe 6, die im Ausführungsbeispiel flankengetriggert ist, sowie einem nachgeschalteten Invertierglied 15 beaufschlagt, wobei am Eingang der monostabilen Kippstufe 6 das Eingangssignal HD ansteht.

Ferner ist ein Vor-Rückwärtszähler 10 vorgesehen, an dessen Takteingang T der Ausgang des ersten UND-Gatters 1 und an dessen Setzeingang S der Ausgang eines Festwertspeichers 16 angeschlossen ist. Der Festwertspeicher 16 beinhaltet bei dem in Fig. 2 dargestellten Ausführungsbeispiel den numerischen Wert 30 und wird durch das Ausgangssignal des ersten UND-Gatters 1 getriggert. Der Ausgang des Vor-Rückwärtszählers 10 ist mit dem Setzeingang des Flip-Flops 7 verbunden. Erreicht der Inhalt des Vor-Rückwärtszählers 10 den Wert Null, so wird am Ausgang Q ein Impuls abgegeben, der das Flip-Flop 7 setzt.

Dem Vorwärtszähleingang V und dem Rückwärtszähleingang R des Vor-Rückwärtszählers 10 ist jeweils ein UND-Gatter 12 und 13 vorgeschaltet. Jeweils einer der Eingänge dieser weiteren UND-Gatter 12 und 13 ist mit dem Ausgang eines Taktgenerators 11 verbunden, der im Fall des Ausführungsbeispiels Rechteckimpulse im Sekundentakt abgibt. Der zweite Eingang des an den Vorwärtszähleingang V des Vor-Rückwärtszählers 10 angeschlossenen UND-Gatters 12 ist mit dem Signal MA beaufschlagt. Der zweite Eingang des an den Rückwärtszähleingang R des Vor-Rückwärtszählers 10 angeschlossenen UND-Gatters 13 ist mit dem Signal MZ beaufschlagt.

Im folgenden wird die Funktionsweise der im vorstehenden in ihrem technischen Aufbau beschriebenen Hochdrucküberwachungsschaltung U näher erläutert. Im Ausgangszustand seien die beiden Flip-Flops 7 und 8 gesetzt, so dass ihre Ausgänge Q auf H-Pegel liegen. Der Ausgang der monostabilen Kippstufe 6 liege auf dem logischen Pegel L. Damit sind in diesem Ausgangszustand alle drei Eingänge des fünften UND-Gatters 5 mit H-Pegel beaufschlagt, so dass das Ausgangssignal SF des fünften UND-Gatters 5 auf H-Pegel liegt, was die Freigabe der Wärmepumpe W bedeutet.

Wird nun das Eingangssignal HB aktiv, so indem es auf H-Pegel übergeht, so wird die monostabile Kippstufe 6, deren Ablaufzeit die konstante Wartezeit darstellt, gestartet. Die konstante Wartezeit beträgt im Ausführungsbeispiel 10 min. Wegen des Invertiergliedes 15 ist nunmehr die UND-Bedingung am Eingang des fünften UND-Gatters 5 nicht mehr erfüllt, so dass dessen Ausgangssignal auf L-Pegel übergeht. Damit ist die Wärmepumpe nicht mehr freigegeben.

War nun der Heizkessel K stillgelegt und damit das Eingangssignal HK nicht aktiv, so liegen die Ausgänge der UND-Gatter 1, 2, 3 und 4 auf L-Pegel, da die UND-Bedingungen an ihren Eingängen nicht erfüllt sind. Die beiden Flip-Flops 7 und 8 bleiben gesetzt, d. h. die Signale an den Ausgängen Q dieser beiden Flip-Flops 7 und 8 verbleiben auf H-Pegel. Damit wird die Wärmepumpe W nach Ablauf der durch die monostabile Kippstufe 6 vorgegebenen konstanten Wartezeit wieder freigegeben.

War dagegen der Heizungskessel K in Betrieb und lag der Betriebszustand Warmwasserbereitung vor (Eingangssignale BW und HK aktiv und auf H-Pegel), so gehen die Ausgänge der UND-Gatter 2 und 4 auf H-Pegel über, so dass das Flip-Flop 8 wegen des nunmehr aktiven Signals an dessen Rücksetzeingang zurückgesetzt wird, mit der Folge, dass das Ausgangssignal an dessen Ausgang Q auf L-Pegel übergeht. Das Flip-Flop 7 dagegen bleibt gesetzt, d.h., das Signal am Ausgang Q des Flip-Flops 7 verbleibt auf H-Pegel. Die Wärmepumpe W wird erst dann freigegeben, wenn die durch die monostabile Kippstufe 6 vorgegebene Wartezeit abgelaufen ist und zusätzlich das Eingangssignal BW, das während des Betriebszustandes Warmwasserbereitung auf H-Pegel lag, wieder auf L-Pegel abgefallen ist, was über die Invertierstufe 9 das Flip-Flop 8 wieder in den gesetzten Zustand mit dem Signal am Ausgang Q auf H-Pegel umschaltet. Dies bedeutet, dass nunmehr die Warmwasserbereitung abgeschlossen ist. Damit wird durch Hochdrucküberwachungsschaltung U ein Verfahrensablauf bewirkt, bei dem – wenn die zusätzliche Wärmequelle in Form des Heizungskessels K zur Warmwasserbereitung zusätzlich zur Wärmepumpe im Zeitpunkt des Auftretens des in Form des Eingangssignals HD vorliegenden Abschaltsignals des Hochdruck-Pressostaten in Betrieb war – die Freigabe der Wärmepumpe erst dann erfolgt, wenn die konstante Wartezeit abgelaufen und die Warmwasserbereitung abgeschlossen ist.

War der Heizungskessel K für Zwecke der Raumheizung in Betrieb und lag keine Warmwasserbereitung vor, so ist das Eingangssignal HK aktiv und damit auf H-Pegel, nicht dagegen das Eingangssignal BW. Damit gehen die Ausgangssignale der UND-Gatter 1 und 3 auf H-Pegel über, so dass das Flip-Flop 7 zurückgesetzt wird, mit der Folge, dass das Signal am Ausgang Q dieses Flip-Flops 7 auf L-Pegel abfällt. Das Flip-Flop 8 bleibt demgegenüber im gesetzten Zustand. Gleichzeitig wird über das Ausgangssignal des ersten UND-Gatters 1 der – im Fall des in Fig. 2 dargestellten Ausführungsbeispiels flankengetriggerte – Vor-Rückwärtszähler 10 mit dem Inhalt des Festwertspeichers 16 geladen. Die ausgangsseitige Impulsfolge des Taktgenerators 11 wird nun entweder über das UND-Gatter 12 auf den flankengetriggerten Vorwärtszähleingang V oder über das UND-Gatter 13 auf den flankengetriggerten Rückwärtszähleingang R des Vor-Rückwärtszählers 10 gegeben. Die Eingangssignale MA und MZ sind gegeneinander verriegelt, d. h., dass entweder das Signal MA oder das Signal MZ aktiv ist. Wie bereits oben erläutert, ist das Eingangssignal MA dann aktiv, wenn der Ventilöffnungsgrad des Mischventils V über den Stellmotor M weiter erhöht wird, in dem Sinn, dass ein zunehmend grösserer Anteil des im Heizungskessel K aufgeheizten Wärmeträgers in den Heizkreislauf eingespeist wird, wohingegen das Eingangssignal MZ dann und nur dann aktiv ist, wenn der Ventilöffnungsgrad über den Stellmotor M verringert wird, in dem Sinn, dass der Heizungskessel K mehr und mehr aus dem Heizkreislauf ausgekoppelt wird und ein immer kleinerer Anteil des von der Wärmepumpe W vorerwärmten Wärmeträgers eine weitere Aufheizung im Heizungskessel K erfährt. Ist das Eingangssignal MA aktiv, so wird der Inhalt des Vor-Rückwärtszählers 10 über seinen vorherigen Ausgangswert hinaus weiter erhöht, während – wenn das Eingangssignal MZ aktiv ist – der Inhalt des Vor-Rückwärtszählers 10 auch durch die Impulsfolge des Taktgenerators 11 verringert wird. Erreicht der Inhalt des Vor-Rückwärtszählers 10 den Wert Null, so geht das Signal am Ausgang Q des Vor-Rückwärtszählers 10 auf H-Pegel über, so dass das Flip-Flop 7 über dieses als Setzsignal wirkende Ausgangssignal wiederum gesetzt wird. Damit erscheint am Ausgang Q des Flip-Flops 7 bei einem Inhalt Null des Vor-Rückwärtszählers 10 ein Ausgangssignal auf H-Pegel, so dass die UND-Bedingung des fünften UND-Gatters 5 erfüllt ist, was am Ausgang des UND-Gatters 5 ein erneutes Freigabesignal veranlasst, wenn auch die durch die monostabile Kippstufe 6 vorgegebene Wartezeit (10 min) abgelaufen ist. Dies führt im Ergebnis dazu, dass im Betriebszustand Raumheizung nach Eingang eines das Erreichen des Temperaturgrenzwertes für die Wärmepumpe W anzeigenden Signals HD des Hochdruck-Pressostaten die Wärmepumpe erst dann wieder freigegeben wird, wenn einerseits die Wartezeit abgelaufen ist und zusätzlich die Temperatur des Wärmeträgers unter den kritischen Temperaturgrenzwert abgesunken ist. Hierbei dient die Stellung des durch den Stellmotor M fernbetätigten Mischventils V als Kriterium für die Temperaturänderung des Wärmeträgers; denn erst wenn der Stellmotor M den bei Auftreten des das Erreichen des Temperaturgrenzwertes signalisierenden Eingangssignals HD vorliegenden Ventilöffnungsgrad des Mischventils V um einen bestimmten Betrag verkleinert hat, kann nach Verstreichen der Wartezeit ein erneutes Freigabesignal entstehen. Die Verringerung des Ventilöffnungsgrades ergibt sich aus dem Produkt von Drehzahl des Stellmotors M und einer Laufzeitspanne des Stellmotors M, wobei die Laufzeitspanne sich als Quotient aus dem Wert des Festwertspeichers 16 und der Frequenz des Taktgenerators 11 ergibt. Für die im Fall des Ausführungsbeispiels genannten Zahlenwerte, nämlich den numerischen Wert 30 als Inhalt des Festwertspeichers 16 und eine Frequenz von 1 Hz für die Frequenz des Taktgenerators 11, bedeutet dies, dass der Mischer 30 s lang in Richtung „Zu" oder zunehmende Auskopplung des Heizungskessels K aus dem Heizkreislauf gelaufen sein muss. Bei einer Gesamtlaufzeit von etwa 4 min zwischen den Endwerten „Auf" und „Zu" des Mischventils V bedeutet diese Laufzeit von 30 s eine Verringerung des Ventilöffnungsgrades gegenüber dem bei Auftreten des Eingangssignals HD vorliegenden um etwa 12%.

Es wird darauf hingewiesen, dass nach jeder Stillsetzung und anschliessender erneuter Freigabe der Wärmepumpe W – wie bereits bisher üblich – eine feste Überwachungszeitspanne von etwa 5 min in Gang gesetzt wird, während der – sofern ein erneutes HD-Signal auftritt – eine erneute Stillegung der Wärmepumpe mit in diesem Fall gekoppelter Störungsanzeige erfolgt.

## Patentansprüche

1. Hochdrucküberwachungsverfahren zum Betrieb einer Wärmepumpe (W) im Rahmen einer mindestens bivalenten Heizungsanlage, bei der ausser der Wärmepumpe (W) mindestens eine zusätzliche Wärmequelle, vorzugsweise ein Heizungskessel (K), zum Erwärmen des die Heizkörper (H) durchströmenden Wärmeträgers vorgesehen ist, die über ein gesteuertes Mischventil (V) in den Heizkreislauf unter Einfluss einer Regeleinrichtung (R) einkoppelbar ist, wobei bei Überschreiten eines die Wärmepumpe (W) gefährdenden Temperaturgrenzwertes des Wärmeträgers durch einen Sensor ein Abschaltsignal (HD-Signal) für die Wärmepumpe abgegeben wird und diese nach einer konstanten Wartezeit wieder freigegeben wird, an die sich eine feste Überwachungszeitspanne anschliesst, während der eine Störungsmeldung mit erneuter Abschaltung der Wärmepumpe dann abgegeben wird, wenn während ihrer Dauer ein erneutes Abschalten auftritt, dadurch gekennzeichnet, dass die Freigabe der Wärmepumpe (W) nur nach Ablauf der konstanten Wartezeit als einziges Kriterium nur dann erfolgt, wenn die zusätzliche Wärmequelle (K) im Zeitpunkt des Auftretens des Abschaltsignals nicht in Betrieb war, dass dagegen, wenn die zusätzliche Wärmequelle (K) zur Erwärmung des Wärmeträgers zusätzlich in Betrieb war, die Freigabe der Wärmepumpe (W) erst dann erfolgt, wenn die konstante Wartezeit abgelaufen ist und die Temperatur des Wärmeträgers den Temperaturgrenzwert unterschritten hat.

2. Hochdrucküberwachungsverfahren nach Anspruch 1 für eine Heizungsanlage, bei der der Wärmeträger auch einem Wärmetauscher (T) zur Warmwasserbereitung zuführbar ist, dadurch gekennzeichnet, dass – wenn die zusätzliche Wärmequelle (K) im Zeitpunkt des Auftretens des Abschaltsignals in Betrieb war und der Betriebszustand Warmwasserbereitung vorlag – die Freigabe der Wärmepumpe (W) erst dann erfolgt, wenn die konstante Wartezeit abgelaufen und die Warmwasserbereitung abgeschlossen ist.

3. Hochdrucküberwachungsverfahren nach einem der beiden Ansprüche 1 oder 2, dadurch gekennzeichnet, dass die Überwachung der Temperatur des Wärmeträgers auf die Unterschreitung des Temperaturgrenzwertes derart erfolgt, dass die Stellung des gesteuerten Mischventils (V) als Kriterium für die Temperaturänderung des Wärmeträgers dient.

4. Hochdrucküberwachungsverfahren nach Anspruch 3, dadurch gekennzeichnet, dass mit Auftreten des Abschaltsignals (HD) ein Speicher (10) auf einen von Null verschiedenen Anfangswert (numerischer Wert 30) gesetzt wird, dass in der zeitlichen Folge das Ausgangssignal eines Taktgenerators (11) für die ersten Zeitspannen, in denen der Öffnungsgrad des Mischventils (V) für die Einkopplung der zusätzlichen Wärmequelle (K) gegenüber der bei Auftreten des Abschaltsignals (HD) vorliegenden Stellung weiter vergrössert wird, dem Speicherinhalt hinzugefügt wird, jedoch für die zweiten Zeitspannen, in denen der Öffnungsgrad des Mischventils (V) verringert wird, vom Speicherinhalt abgezogen wird, und dass eine hinreichende Unterschreitung des Temperaturgrenzwertes dann signalisiert wird, wenn der Inhalt des Speichers (10) einen unterhalb des Temperaturgrenzwertes, vorzugsweise beim Wert Null, liegenden Auslösegrenzwert erreicht.

5. Hochdrucküberwachungsverfahren nach Anspruch 4, dadurch gekennzeichnet, dass mit Auftreten des Abschaltsignals (HD) ein als Speicher (10) dienender Vor-Rückwärtszähler auf einen von Null verschiedenen Anfangswert (numerischer Wert 30) gesetzt wird, dass die Impulse des Taktgenerators (11) für die ersten Zeitspannen dem Vorwärtszähleingang (V) und für die zweiten Zeitspannen dem Rückwärtszähleingang (R) des Vor-Rückwärtszählers (10) zugeführt sind, wobei mit Erreichen des Inhalts Null des Vor-Rückwärtszählers an dessen Ausgang ein das Erreichen des Auslösegrenzwertes anzeigendes Signal auftritt.

## Claims

1. High-pressure monitoring method for operating a heat pump (W) in the framework of an at least bivalent heating plant, wherein, in addition to the heat pump (W), at least one additional heat source, preferably a heating boiler (K) is provided which serves to heat the heat carrier which flows through the radiators (H) and which can be input-coupled into the heating cycle *via* a controlled mixing valve (V) under the control of a regulating device (R), wherein, when a temperature threshold value of the heat carrier endangering the heat pump (W) is exceeded by a sensor, a disconnect signal (HD signal) for the heat pump is emitted and the latter is enabled again following a constant delay time which is followed by a fixed monitoring time during which a fault message resulting in renewed disconnection of the heat pump is given if a new disconnection occurs during its duration, characterised in that the heat pump (W) is enabled only following the expiration of the constant delay time as sole criterion only when the additional heat source (K) was not in operation at the time of the occurrence of the disconnect signal, that on the other hand when the additional heat source (K) which serves to heat the heat carrier was additionally in operation, the heat pump (W) is enabled only when the constant delay time has expired and the temperature of the heat carrier has fallen below the temperature threshold value.

2. High-pressure monitoring method as claimed in Claim 1 for a heating plant, wherein the heat carrier can also be supplied to a heat exchanger (T) which serves to prepare hot water, characterised in that—when the additional heat source (K) was in operation at the time of the occurrence of the disconnect signal and the operating state hot water preparation prevailed—the heat pump (W) is enabled only when the constant delay time has expired and the hot water preparation has been concluded.

3. High-pressure monitoring method as claimed in Claim 1 or 2, characterised in that the monitoring of the temperature of the heat carrier in respect of the undershooting of the temperature threshold value is effected in such manner that the status of the controlled mixer valv (V) serves as criterion for the temperature change in the heat carrier.

4. High-pressure monitoring method as claimed in Claim 3, characterised in that on the occurrence of the disconnect signal (HD) a store (10) is set at a start value which differs from zero (numerical value 30), that in time sequence, for the first time intervals in which the degree of opening of the mixer valve (V) for the input-coupling of the additional heat source (K) is further increased in comparison with the setting which exists on the occurrence of the disconnect signal (HD), the output signal from a clock pulse generator (11) is added to the store content, but for the second time intervals in which the degree of opening of the mixer valve (V) is reduced it is deducted from the store content, and that an adequate undershooting of the temperature threshold value is signalled when the content of the store (10) reaches a trigger threshold value situated below the temperature threshold value, preferably zero.

5. High-pressure monitoring method as claimed in Claim 4, characterised in that on the occurrence of the disconnect signal (HD), a forwards-backwards counter which serves as store (10) is set at a start value which differs from zero, that the pulses of the clock pulse generator are fed to the forwards counting input (V) of the forwards-backwards counter (10) for the first time intervals and to the backwards counting input (R) for the second time intervals, where, when the zero contents of the forwards-backwards counter is reached, a signal which indicates that the trigger threshold value has been reached occurs at the output thereof.

## Revendications

1. Procédé de contrôle pour le fonctionnement d'une pompe à chaleur (W) dans le cadre d'une installation de chauffage au moins bivalente, selon lequel, en dehors de la pompe à chaleur (W), il est prévu au moins une source de chaleur supplémentaire, de préférence une chaudière de chauffage (K) servant à chauffer l'agent caloporteur circulant dans le radiateur (H) et qui peut être accouplée par l'intermédiaire d'une vanne de mélange (V) commandée au circuit de chauffage sous l'influence d'un dispositif de réglage (7), auquel cas, lorsque l'agent caloporteur dépasse une limite de température dangereuse pour la pompe à chaleur (W), un signal de débranchement (signal HD) pour la pompe à chaleur est délivré par un capteur et cette dernière est à nouveau débloquée au bout d'un temps d'attente constant, auquel succède un intervalle de temps fixe de contrôle, pendant lequel une signalisation de perturbation est délivrée, avec un nouveau débranchement de la pompe à chaleur, lorsque, pendant la durée de ce temps, il apparaît un nouveau débranchement, caractérisé par le fait que le déblocage de la pompe à chaleur (W) s'effectue uniquement après l'écoulement du temps d'attente constant en tant que critère unique, seulement lorsque la source de chaleur (K) supplémentaire n'était pas en fonctionnement à l'instant de l'apparition du signal de débranchement et que, au contraire, lorsque la source de chaleur supplémentaire (K) servant à chauffer l'agent caloporteur fonctionnait en supplément, le déblocage de la pompe à chaleur (W) ne s'effectue que lorsque le temps d'attente constant est écoulé et que la température de l'agent caloporteur est descendue en dessous de la limite de température.

2. Procédé de contrôle de la haute pression selon la revendication 1 pour une installation de chauffage, dans laquelle l'agent caloporteur peut être également envoyé à un échangeur de chaleur (T) pour la préparation d'eau chaude, caractérisé par le fait que, lorsque la source de chaleur supplémentaire (K) était en fonctionnement à l'instant de l'apparition du signal de débranchement et que l'installation se trouvait dans l'état de fonctionnement préparation d'eau chaude, le déblocage de la pompe (W) ne s'effectue que lorsque le temps d'attente constant est écoulé et que la préparation d'eau chaude est interrompue.

3. Procédé de contrôle de la haute pression suivant l'une des revendications 1 ou 2, caractérisé par le fait que le contrôle de la température de l'agent caloporteur, servant à déterminer si cette dernière descend en dessous de la limite de température, s'effectue de telle sorte que la position de la vanne de mélange commandée (V) sert de critère pour la variation de la température de l'agent caloporteur.

4. Procédé de contrôle de la haute pression suivant la revendication 3, caractérisé par le fait que, lors de l'apparition du signal de débranchement (HD), une mémoire (10) est positionnée sur une valeur initiale différente de zéro (valeur numérique 30), que dans la suite temporelle le signal de sortie d'un générateur de cadence (11) est ajouté au contenu de la mémoire pour les premiers intervalles de temps, pendant lesquels le degré d'ouverture de la vanne de mélange (V) continue à être augmenté pour l'accouplement de la source de chaleur supplémentaire (K) par rapport à la position présente lors de l'apparition du signal de débranchement (HD), mais est déduit du contenu de la mémoire pour les seconds intervalles de temps, pendant lesquels le degré d'ouverture de la vanne de mélange (V) est réduit, et qu'une chute suffisante de la température en dessous de la limite de température est signalée lorsque le contenu de la mémoire (10) atteint une valeur limite de déclenchement inférieure à la limite de température, de préférence pour la valeur zéro.

5. Procédé de contrôle de la haute pression selon la revendication 4, caractérisé par le fait que, lors de l'apparition du signal de débranchement (HD), le compteur progressif-régressif servant de mémoire (10) est positionné sur une valeur initiale différente de zéro (valeur numérique 30), que les impulsions du générateur de cadence (11) pour les premiers intervalles de temps sont envoyés à l'entrée de comptage progressif (V) et, pour les seconds intervalles de temps, à l'entrée de comptage régressif (R) du compteur progressif-régressif (10), auquel cas un signal indiquant l'apparition de la valeur limite de déclenchement apparaît lorsque le contenu zéro du compteur progressif-régressif apparaît à la sortie de ce dernier.

FIG 1

FIG 2